(19) **Europäisches Patentamt / European Patent Office / Office européen des brevets**

(11) **EP 1 168 131 B1**

(12) **EUROPEAN PATENT SPECIFICATION**

(45) Date of publication and mention
of the grant of the patent:
**21.02.2007 Bulletin 2007/08**

(51) Int Cl.:
***G05B 23/02*** *(2006.01)*

(21) Application number: **01305666.8**

(22) Date of filing: **29.06.2001**

(54) **Method and system for industrial operator guidance through prediction-based alarm recognition**

Verfahren und System zur industriellen Bedienerführung mittels prädiktiver Alarmerkennung

Procédé et système pour assister un opérateur industriel par reconnaissance des alarmes basée sur la prédiction

(84) Designated Contracting States:
**AT CH DE FR GB LI**

(30) Priority: **30.06.2000 US 608361**

(43) Date of publication of application:
**02.01.2002 Bulletin 2002/01**

(73) Proprietor: **SIEMENS CORPORATE RESEARCH, INC.**
**Princeton, New Jersey 08540 (US)**

(72) Inventors:
• **Rao, Bharat, R.**
**Robbinsville, NJ 08540 (US)**

• **Rickard, Scott T.**
**Princeton, NJ 08540 (US)**

(74) Representative: **Vigars, Christopher Ian**
**HASELTINE LAKE,**
**Redcliff Quay,**
**120 Redcliff Street**
**Bristol BS1 6HU (GB)**

(56) References cited:
WO-A-00/10059          US-A- 4 630 189
US-A- 5 566 092        US-A- 5 682 317
US-A- 5 949 678

**Description**

The present invention relates to the field of industrial operator guidance through prediction-based alarm recognition and, more specifically, to a method which utilizes the prediction of future plant sensor readings based on past readings to continuously determine if the current plant state matches past alarm plant states for the guidance of plant operators.

In industrial manufacturing or processing operations, it is generally desired that on-line data be provided for oversight and control of activities. While reference is herein generally made to manufacturing operations, it will be understood that generally similar consideration are also applicable to processing operations. Manufacturing plants typically have systems that sample, display, and store data from a plurality of sensors. Manufacturing facilities are commonly equipped with a plurality of sensors, possibly hundreds of sensors, which are sampled, in many cases on a continuous basis, to provide on-line information to plant operators. This sensor information, which includes control signals, generally contains within it valuable information on trends about plant operation. The value of the information is also a function of its ready availability in a useful form and, in practice, these trends may be difficult to discern and assess readily due to the high-dimensionality and size of the data. Buried within this sensor data may be valuable information about patterns and trends in the plant operation, such as information that will alert plant operators to dangerous plant conditions. Extracting these patterns can be difficult particularly when the size and dimensionality of the data is high. See, for example, Fayyad, U.M. 1996 "From data mining to knowledge discovery: An overview", in Fayyad, U.M. et al., eds., ADVANCES IN KNOWLEDGE DISCOVERY AND DATA MINING. MIT Press. 1 - 35; and Locher, G. 1996. Automatic knowledge acquisition in industrial processes using the example of roller grinding mill. ZKG International 49(8).

In a typical situation, a plant operator may be trying to determine whether the current plant state is normal, or whether an alarm state exists and a change may be needed to avoid an undesirable or potentially disastrous situation. An operator may typically make such a decision based on visually comparing current sensor readings from the plant with large paper-based logs of past sensor readings. When similar situations are found, the controller can determine whether the past state was an alarm state and, if so, examine which control action was taken and the effects of the control action and choose the appropriate control action for the current situation. Such a decision-making process naturally takes a certain time for completion and has performance limitations both through the operator's experience level and the operator's ability to compare large amounts of data at one time. By recognizing alarm states, the operator can more speedily and effectively control the plant and avoid potential problems by avoiding previous control mistakes.

It is often critical that alarm states be recognized as soon as possible; it would be useful to know that a problem is unfolding as soon as possible, as opposed to recognizing the crisis after all its effects are apparent. In addition, it would be useful to know which past control actions are appropriate as quickly as possible in a crisis situation. An advantage of prediction-based alarm recognition is that it can allow retrieval of crisis situations before they occur. Thus, if it is possible to predict a crisis situation, then it is also possible via prediction-based alarm recognition to retrieve past alarm situations similar to the current situation which indicate that a crisis is imminent.

The difficulty in any alarm recognition scheme is that the metric one should use to determine whether a past plant state matches the current plant state is not known. The plant operators themselves often provide inconsistent and ill-defined metrics on which they believe they base their visual alarm recognition.

Automated schemes for alarm recognition are typically based upon comparing raw data values and/or filtered sensor values. The filters are often standard statistical measures (e.g., mean) and shape detection filters (e.g., a bump detector). These methods often provide substandard performance because they are the based on the designer's idea of what constitutes a good metric and not determined by the data. Moreover, the complexity of the actual best metric may be more complex than the representational capability of the standard filters.

Another difficulty with traditional alarm recognition schemes is that the computation required to match all the sensors and various statistics of these sensors with all such values corresponding to past time points is often impossible to compute within the time interval that the resulting alarm recognition information would be useful. One way that alarm recognition system designers have alleviated this problem is by reducing the number of sensors considered for alarm recognition, the size of the history of each sensor, and/or the number of past time points that are considered for alarm recognition. Since the critical parameters for alarm recognition are often not known, these reductions in complexity often eliminate the possibility of correctly determining the plant state on which alarm recognition should be based, thus resulting in substandard performance.

Alternately, even if the sensors chosen by the designers are the correct ones in terms of characterizing alarm situations, they may not be the best ones for characterizing situations as quickly as possible. For example, a crisis situation may be correctly recognized when the value of a specified sensor x falls below some threshold. However, this recognition may occur only late in the crisis situation; other variables, y, z, and w, although not sufficient to identify the crisis situation as precisely as x, may jointly contain information that allows the crisis situation to be predicted well in advance. Thus, the fall of x's value in the future may be indicated by the current values and trends of the variables, y, z, and w. Under the above scenario, prediction-based alarm recognition would allow identification of such a crisis situation by predicting that the value of x will fall in the future, a prediction presumably based upon the values of y, z, and w.

A machine fault diagnostic system is disclosed by US 5,566,092 in which hypothesis and a procedure based on fuzzy logic and physical bearing models to operate with the fault diagnostic network for detecting faults that cannot be recognized.

An object of this invention is to define an alarm recognition method that is based not only on the current values of the sensors, but in fact, on the future predicted values of the sensors.

It is another object of the invention to develop a system that can be automatically deployed in, for example, a cement plant, and, after an initial training phase which comprises "watching" and learning from sensor behaviour, the system can be used to retrieve past plant alarm states which are similar to the current plant state in order to aid the plant operator control the plant.

In accordance with an aspect of the invention, there is provided a method for retrieving past alarm plant states or situations $C_i$ similar to a current plant state or situation C for the guidance of a plant operator, whereby the plant comprises a plurality of sensors providing respective parameter values ($x_i(t)$), the method comprising the steps of: collecting a database of sensor readings; specifying a subset S of s sensors from the plurality of sensors; specifying a subset N of h prediction time points; specifying and training a model M on the database of sensor readings to provide predictions of future values $\left(x_i^n(t)\right)$ for the s sensors in S for the h time points in N; specifying a width $w$ to be used as the number of time points of sensor data to be considered for a situation; defining a situation $C$ as a collection of sensor data from a start time $t_c$ to an end time $t_{c+w}$; wherein the method further comprises the steps of: specifying a distance metric $\| . \|$; specifying a transformation function $X$, the transformation function using the model M and other transforms (e.g., the identity transform) and operating on the parameter values of the sensors in S at any time t to return a respective matrix of real numbers of size h-by-s ($X(t)$); obtaining from a database a set of labelled alarm situations $C_i$ and associated alarm sensors $S_i$, $S_j$ being a subset of S; operating respectively on the sensor data of situations $C$ and $C_i$ using the transformation function $X$ for returning a set of mappings of the data contained in $C$ and $C_i$ (T= $\{X(t_c), X(t_{c+1}), ...X(t_{c+w})\}$ and $T_i^{'} = \{X(t_i), X(t_{i+1}), ...X(t_{i+w})\}$); operating on the set of mappings using the distance metric $\| . \|$ so as to obtain a set of distances between the mapping corresponding to situation $C$ and the mappings corresponding to each of the situations $C_i$, whereby the distance between the mapping corresponding to situation $C$ will only be based on the subset of readings which corresponds to $S_i$; comparing the set of distances; and selecting situations $C_l$ which have associated therewith a distance to the mapping situation $C$ below a preset threshold $A_i$.

In accordance with another aspect of the invention, there is provided a system for retrieving past plant alarm states or situations $C_l$ similar to a current plant state or situation $C$ for the guidance of a plant operator, whereby the plant comprises a plurality of sensors providing respective parameter values ($x_i(t)$), the system comprising: means for collecting a database of sensor readings; means for specifying a subset S of s sensors from the plurality of sensors; means for specifying a subset N of h prediction time points; means for specifying and training a model M on the database of sensor readings to provide predictions for future values $\left(x_i^n(t)\right)$ for the s sensors in S for the h time points in N; means for specifying a width w to be used as the number of time points of sensor data to be considered for a situation; means for defining a situation $C$ as a collection of sensor data from a situation $t_c$ to an time $t_{c+w}$; means for specifying a distance metric $\| . \|$; means for specifying a transformation function $X$, the transformation function using the model M and other transforms (e.g., the identity transform) and operating on the parameter values of the sensors in S at any time t to return a respective matrix of real numbers of size h-by-s ($X(t)$); means for obtaining from a database a set of labelled alarm situations $C_i$ and associated alarm sensors $S_i$, $S_i$ being a subset of S; means for operating respectively on the sensor data of situations $C$ and $C_i$ using the transformation function $X$ for returning a set of mappings of the data contained in $C$ and $C_i$ (T = $\{X(t_c), X(t_{c+l}), ...X(t_{c+w})\}$ and $T_i^{'} = \{X(t_l), X(t_{l+1}), ...X(t_{l+w})\}$); $(t_{i+w})\}$); means for operating on the set of mappings using the distance metric $\| . \|$ so as to obtain a set of distances between the mapping corresponding to the situation C and the mappings corresponding to each of the situations $C_i$, whereby the distance between the mapping corresponding to a given past alarm state $C_i$, and the mapping corresponding to situation $C$ will only be based on the subset of readings which corresponds to $S_i$; means for comparing the set of distances; and means for selecting situations $C_i$ which have associated therewith a distance to the mapping of situation $C$ below a preset threshold $A_i$.

The thresholds, $A_i$, can be adjusted for each alarm situation so as not to cause too many false alarms while still correctly identifying impending alarm conditions.

The system utilizes a predictive model trained to predict future plant sensor readings based on past and current readings to act as intelligent filter to be used in an alarm recognition process. Past alarm situations similar to the current situation are retrieved using mappings of the sensor data including those provided by the trained prediction model. The mappings in the past with a matching score below a threshold to the current mapping correspond to the alarm time points in the past which are similar enough to the current situation to warn the operator. One main advantage of this system is that it can, due to the use of the predictions, flag alarm situations that are similar to the future state of the plant. Due to this advance warning, this system can be extremely useful in both preventing and helping to mitigate crisis situations. Once an alarm condition is identified, the past alarm situations can be analyzed and plant operators can examine how past control actions affected the plant to choose the appropriate action.

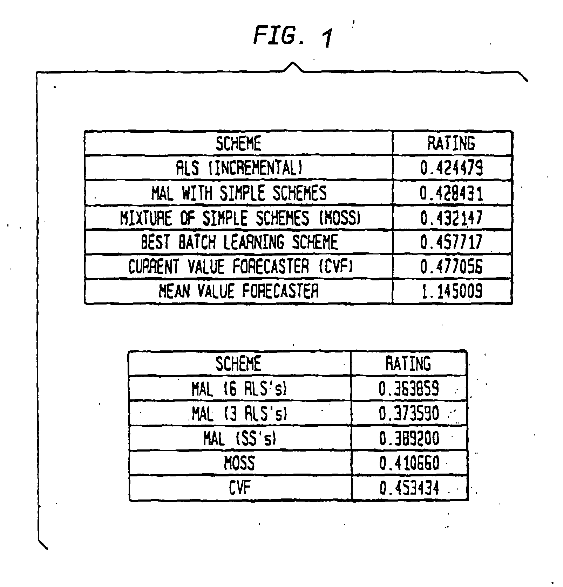

Figure 1 shows Table 1 and Table 2, helpful to a fuller understanding of the invention.

In order to successfully accomplish the above task, an alarm recognition method in accordance with the invention includes enough information to match plant state, know what variables are critical for plant state for this situation, and use shape only when important. Prediction-based alarm recognition in accordance with the principles of the invention does all of these automatically without requiring tuning or feedback from a human expert.

For the purpose of explanation, it is assumed that a predictive model, M, has been trained, presumably during the "watching and learning" phase described above. This model M provides predictions for the future values of all of the sensors previously identified as alarm sensors. The model M may be learned by using any of many different adaptive methods; examples include techniques from time series analysis such as AR, MA, ARIMA methods, neural networks learning methods, and modeling techniques from machine learning and statistics.

This technique uses the model as an intelligent, adaptive filter that defines the similarity metric on which situation matching is determined. Prediction-based alarm recognition in accordance with the present invention uses an arbitrary predictive model as an intelligent adaptive filter on which to base alarm recognition.

As discussed above, alarm recognition in accordance with the principles of the present invention is based on the situation matching scheme. The situation matching scheme compares two situations and returns a "similarity" score. A situation comprises the values of all, or some subset of the sensors in a continuous time interval from some start time $t_c$ to an end time $t_{c+w}$. A situation can thus be represented by a matrix.

In a preferred exemplary embodiment, retrieval in accordance with the principles of the present invention comprises the following steps.

Specifying a set of times in the past corresponding to alarm plant states, $C_i$,

Specifying a set of sensors, $S_i$, for each past alarm state, $C_i$. Typically, the sensors selected for each alarm condition will be identified by operators as being significant to the alarm situation.

Specifying an alarm matching threshold $A_i$ for each alarm condition $C_i$.

Specifying a subset of sensors of interest for prediction, *S*, wherein s is the dimensionality of *S*. Typically, S is the union of the $S_i$ for all i.

Specifying a distance metric $\|A, B\|$, where A, B, are matrices with the same number of rows and columns, noting that $\|A, B\|$ is a real number.

Specifying a situation width, *w*.

Specifying a transformation function X which can be applied at any time t, for all the sensors in S, to produce a matrix, X(t). Typically, X comprises s transformation functions, $X_i$, wherein $X_i$ is defined for each of the sensors $x_i \in S$. Typically, these transfer functions make use of the trained model, M. Typically, applying $X_i$ at a specified time t, produces a vector $X_i(t)$ which has dimensionality h. The vectors are then grouped together to produce a matrix X(t), of size h-by-s, where each column in X(t) corresponds to the vector created by applying $X_i(t)$ for each of the $x_i \in S$. Various candidate functions for X are described below. Typically X is applied multiple times at various time points in the case window to produce a matrix time series, $\underline{T}$. ($\underline{T}$ is a series of matrices X(t) at different time points.) $\underline{T}$ may be viewed as a mapping from the raw sensor values to some filtered combination of these values.

Specifying an overall distance metric, $O(\underline{T}, \underline{T_i}')$, which combines the result of applying the distance metric $\| , \|$ to two matrix time series, $\underline{T}$ and $\underline{T_i}'$. It is understood that the distance computed for a given Ti' corresponding to past alarm state Ci will only be based on the subset of readings from T corresponding to Si.

For example, if two series of matrices are generated, $\underline{T} = \{X(t_c), X(t_{c+1}), .. X(t_{c+w})\}$, and $\underline{T_i}' = \{X(t_i), X(t_{i+1}), .. X(t_{i+w})\}$, the first step is to compute the distances between corresponding pairs of matrices, $\|X(t_c), X(t_i)\|$, $\|X(t_{c+1}), X(t_{i+1})\| .. \|X(t_{c+w}), X(t_{i+w})\|$, and then combine the results into a single overall distance. A simple way to do this is to add all these values, but other methods are also possible. For example, O could compute the weighted sum of the various distances, or even the sum of squares, and so forth.

A given situation, *C*, typically includes all sensor values, that is, the values indicated by sensors x in S from a start situation time $t_c$ to an end situation time $t_{c+w}$.

The Y-axis shows time in minutes. The X-axis shows the 421 features (sensors) "?" values are in red, "0" in green, and real data is represented by a gray value between black and white, the darkness of the value being proportional to the data.

Then, to perform alarm recognition for a case C, X(t) is applied to the data at times $t_c$, $t_{c+1}$, ..., $t_{c+w}$. to produce a matrix time series, *T*. At each timepoint, X outputs a prediction matrix X(t) of size h-by-s. Similarly, X is applied to a candidate situation $C_i$ in the past for all sensors in $S_i$ from some start time $t_i < t_c$, to an end time $t_{i+w}$, to produce another matrix time series $T_i'$. If the candidate situation $C_i$ has overall distance from *C* as specified by O less than threshold $A_i$, then $C_i$ is output as a matching alarm condition, where *i* ranges over some set of consideration times. Thus, all indices i, for which $O(T,T_i') < A_i$ corresponds to an alarm condition.

In the step of specifying the subset of sensors for each past alarm state, a possible initial choice is to assume that the plant operators specify some subset $S_i$ of sensors that they have deemed to be of general interest or importance. A possible default choice is to include all sensors.

In the step of specifying the distance metric, a possible choice for the distance metric is the mean square distance: if A and B are p-by-s matrices, that is, A = $[a_{ij}]$ and B = $[b_{ij}]$, $0 \leq i < p$, $0 \leq j < s$, then $\|A,B\| = \Sigma_{ij}(a_{ij} - b_{ij})^2$. However, any function that maps a pair of matrices to a real number can be used, as may be appropriate. For example, the weighted absolute distance, that is, $\|A,B\| = \Sigma_{ij}\alpha_{ij}|a_{ij} - b_{ij}|$, where $\alpha_{ij}$ is a weighting factor, and |.| denotes the absolute value. It is also possible to use distance functions that match on higher-level features, such as shape matching via bump-detection, zero crossings, detecting periodicities, and so forth.

In the step of specifying the situation width, which is the size of the time frame to be considered for alarm recognition, a possible initial choice is to base this on a width specified by the operators. In general, the choice of width is determined by how quickly the process changes; that is, for processes that change character very quickly, a small width is appropriate, whereas, more slowly changing processes need to have a larger situation width associated with situation retrieval. In practice this is generally straightforward, because operators have a reasonable idea of the order of the time scale of interest in the manufacturing process, such as whether it is in seconds, minutes, or hours. For quickly changing processes, such as in a steel plant, the width could correspond to a time frame of 10 msec, in a more slowly changing process, such as a cement plant, the width could be, say, 10 minutes. For even more slowly changing process, say, economic processes, the width could be on the order of decades, whereas in even slower processes, such as the average temperature per year for the world, the width could be on the order of centuries. Research indicates that it is not necessary for the width to be specified precisely; having roughly the correct order of magnitude can lead to reasonable alarm state recognition.

In the step of specifying the transformation function it is noted that an example of a simple, known transformation function is the Identity transform, which returns the raw values of the sensors, x in S. The dimensionality of the vector produced by the Identity transform, h=1. The notion of a transformation function as herein utilized subsumes not only arbitrary functions on the raw data, but also functions of predictions made from the data.

It is essential that the predictive model, M, be trained on the data. It is the model that acts as an intelligent filter and provides the key function in the T maps. Given data for all sensors up to some situation start time, $t_c$, for a sensor $x_i \in S$, model M provides predictions for the value of $x_i(t_c + n)$ at one or more time points, $n > 0$ in the future. "n" is called the horizon. Let H be a pre-defined horizon set containing h distinct horizon values. Let $x_i^n(t_c)$ denote the M's prediction for the value of $x_i(t_c + n)$. M provides such predictions for all $x_i \in S$, for all $n \in H$. In a further step in the present exemplary embodiment, one of a plurality of matching metrics is calculated for *C* and for all the candidate alarm situations $C_i$ from the past. For example, the plurality of metrics may be based upon the 5 transforms "Predict-from", "Predict-onto", "Predict-onto-error", "ΔPredict-from", or "ΔPredict-onto", as will be further explained below.

In a further step, the values of n in H are specified. Illustratively, the 5 transforms below assume that H= {1,2,5,10,15,30,60}, and the dimensionality, h, of N, h=7. However, any arbitrary values may be used for n in H, as long as n>0, and M generates predictions for that horizon, n. The examples below define the functional form of $X_i(t)$ for the above horizon set. X(t) is constructed by grouping the vectors $X_i(t)$ into a h-by-s matrix. A number of X(t)'s are compared with the X(t) corresponding to C via the comparison operator, O, and t with the X(t) corresponding to the best match would be selected as the matching time. One way of calculating the matching time is as follows:

$$\arg\min_t \sum_{i \in S} \sum_{k=0}^{k<w} \|X_i(t_c + k), X_i(t + k)\|,$$

where,

$t_c$ is the start time of the case,

*w* is the width,

*S* is a set of sensor indices of interest

Some examples $X_i$ transforms are defined as follows:

**A. "Predict-from" transform**: Using this transform the model makes prediction from the current time to time points in the future for a set of sensors. The model acts as an intelligent filter and alarm recognition is based on remapped sensor data. Sensor information which is important for the plant state but which is not necessarily included in the sensor of interest set can be included in the calculation if the model depends on the sensor's reading for predicting a sensor of interest.

$\hat{x}_i^n$ (t) = predictionfrom the model M for sensor $i$, $n$ minutesinto the future from time $t$

$$X_i^{from}(t) = \begin{bmatrix} \hat{x}_i^1(t) \\ \hat{x}_i^2(t) \\ \hat{x}_i^5(t) \\ \hat{x}_i^{10}(t) \\ \hat{x}_i^{15}(t) \\ \hat{x}_i^{30}(t) \\ \hat{x}_i^{60}(t) \end{bmatrix}$$

**B. Predict-onto" transform:** This matching criterion is similar to the predict-from criteria except that rather than predicting from a given time point into the future, predictions are taken from past time points at various offsets so that each model provides a prediction of the current reading of the sensor. This matching method has similar advantages as the predict-from method in that the model acts as an intelligent filter and alarm recognition is based on remapped sensor data and, in the same way, sensor information important for the plant state but not necessarily included in the sensor of interest set can be included in the calculation if the model depends on the sensor's reading for predicting a sensor of interest.

$\hat{x}_i^n$ (t) = prediction from model M for sensor $i$, $n$ minutes into the future from time $t$

$$X_i^{onto}(t) = \begin{bmatrix} \hat{x}_i^1(t-1) \\ \hat{x}_i^2(t-2) \\ \hat{x}_i^5(t-5) \\ \hat{x}_i^{10}(t-10) \\ \hat{x}_i^{15}(t-15) \\ \hat{x}_i^{30}(t-30) \\ \hat{x}_i^{60}(t-60) \end{bmatrix}$$

**C. "Predict-onto error" transform:** This matching transform generates the same predictions as the predict-onto method, but it calculates the error in the predictions (both to the current time point and to past time points) before comparison results in a final score calculation. This transform might perform well for models that make inaccurate predictions in case situations; it will not perform well if the model is highly accurate.

$x_i(t)$ = sensor reading at time $t$

$\hat{x}_i^n$ (t) = prediction from model M for sensor $i$, $n$ minutes into the future from time $t$

$$X_i^{\text{onto-error}}(t) = \begin{bmatrix} \hat{x}_i^{1}(t-1) - x_i(t) \\ \hat{x}_i^{2}(t-2) - x_i(t) \\ \hat{x}_i^{5}(t-5) - x_i(t) \\ \hat{x}_i^{10}(t-10) - x_i(t) \\ \hat{x}_i^{15}(t-15) - x_i(t) \\ \hat{x}_i^{30}(t-30) - x_i(t) \\ \hat{x}_i^{60}(t-60) - x_i(t) \end{bmatrix}$$

Note : $\hat{x}_i^{n}(t - n) - x_i(t)$ = error for prediction $n$ minutes ago

**D. "ΔPredict-from" transform**: This transform is similar to the predict-from matching transform, except that it uses the change difference from the current sensor reading to the predictions as it's basis. One advantage of this metric is that it is not amplitude sensitive.

$x_i(t)$ = sensor i's reading at time $t$

$\hat{x}_i^{n}(t)$ = prediction from model M for sensor $i$, $n$ minutes into the future from time $t$

$$X_i^{\Delta\text{from}}(t) = \begin{bmatrix} \hat{x}_i^{1}(t) - x_i(t) \\ \hat{x}_i^{2}(t) - x_i(t) \\ \hat{x}_i^{5}(t) - x_i(t) \\ \hat{x}_i^{10}(t) - x_i(t) \\ \hat{x}_i^{15}(t) - x_i(t) \\ \hat{x}_i^{30}(t) - x_i(t) \\ \hat{x}_i^{60}(t) - x_i(t) \end{bmatrix}$$

**E. "ΔPredict-onto" transform**: This transform is similar to the predict-onto matching transform, only it uses the change difference from the past sensor reading to the predictions as its basis. One advantage of this transform is that it is not amplitude sensitive.

$x_i(t)$ = sensor reading at time $t$

$\hat{x}_i^{n}(t)$ = prediction from model M for sensor $i$, $n$ minutes into the future from time $t$

$$X_i^{\Delta\text{onto}}(t) = \begin{bmatrix} \hat{x}_i^{1}(t-1) - x_i(t-1) \\ \hat{x}_i^{2}(t-2) - x_i(t-2) \\ \hat{x}_i^{5}(t-5) - x_i(t-5) \\ \hat{x}_i^{10}(t-10) - x_i(t-10) \\ \hat{x}_i^{15}(t-15) - x_i(t-15) \\ \hat{x}_i^{30}(t-30) - x_i(t-30) \\ \hat{x}_i^{60}(t-60) - x_i(t-60) \end{bmatrix}$$

It will be understood that the present invention is intended to be implemented with the use of a digital computer. While the present invention has been described by way of exemplary embodiments, it will be understood by one of skill in the art to which it pertains that various changes and modifications may be made without departing from the scope of the invention which is defined by the claims following.

**Claims**

1.    A method for retrieving past alarm plant states or situations $C_i$ similar to a current plant state or situation $C$ for the guidance of a plant operator, whereby said plant comprises a plurality of sensors providing respective parameter

values ($x_i(t)$), said method comprising the steps of:

collecting a database of sensor readings;
specifying a subset S of s sensors from said plurality of sensors;
specifying a subset N of h prediction time points;

specifying and training a model M on the database of sensor readings to provide predictions of future values $\left(x_i^n(t)\right)$ for the s sensors in S for the h time points in N;

specifying a width w to be used as the number of time points of sensor data to be considered for a situation;
defining a situation $C$ as a collection of sensor data from a start time $t_c$ to an end time $t_{c+w}$;

**characterised in that** said method further comprises the steps of:

specifying a distance metric $\| . \|$ ;
specifying a transformation function $X$, said transformation function using the model M and other transforms (e.g.,the identity transform) and operating on the parameter values of the sensors in S at any time t to return a respective matrix of real numbers of size h-by-s (X(t));
obtaining from a database a set of labelled alarm situations $C_i$ and associated alarm sensors $S_i$, $S_i$ being a subset of S;
operating respectively on the sensor data of situations $C$ and $C_i$ using said transformation function X for returning a set of mappings of the data contained in $C$ and $C_i$(T = {$X(t_c)$, $X(t_{c+1})$, ...X ($t_{c+w}$)} and

$$T_i' = \{X(t_i), X(t_{i+1}), \ldots X(t_{i+w})\});$$

operating on said set of mappings using said distance metric $\| . \|$ so as to obtain a set of distances between the mapping corresponding to the situation $C$ and the mappings corresponding to each of said situations $C_i$, whereby the distance between the mapping corresponding to a given past alarm state $C_i$, and the mapping corresponding to situation $C$ will only be based on the subset of readings which corresponds to $S_i$;
comparing the set of distances; and
selecting situations $C_l$ which have associated therewith a distance to the mapping of situation $C$ below a preset threshold $A_i$.

2. A method according to claim 1, wherein said subset S contains all of said plurality of sensors.

3. A method according to claim 1, wherein said
subset S is preselected from said plurality of sensors.

4. A method according to claim 1, wherein in said
step of comparing, C is compared to all possible candidate states $C_i$ in the past from a predetermined start time.

5. A method according to claim 1, wherein said
distance metric is the mean square distance, or the absolute distance.

6. A method according to claim 1, including a step
of utilizing said predictive model, M, to provide predictions for the value of $x_i(t_c + n)$ at one or more time points, $n>0$

in the future, wherein "n" is called the horizon and $\mathbf{x}_i^n(t_c)$ denotes M's prediction for the value of $x_i(t_c + n)$, which is defined to be the value of sensor $i$ at time $t_c+n$

7. A method according to claim 1, including a step
wherein M provides such predictions for all x in S, for some pre-specified set of horizons, N.

8. A method according to claim 1, wherein in said
transformation function $X_i$ utilizing predictive model M is of the form,

$\mathbf{x}_i^n(t)$ = prediction from the model M for sensor $i$, $n$ minutes into the future from time $t$

$$X_i^{from}(t) = \begin{bmatrix} \hat{x}_i^1(t) \\ \hat{x}_i^2(t) \\ \hat{x}_i^3(t) \\ \hat{x}_i^{10}(t) \\ \hat{x}_i^{15}(t) \\ \hat{x}_i^{30}(t) \\ \hat{x}_i^{60}(t) \end{bmatrix}.$$

**9.** A method according to claim 1, wherein in said transformation function $X_i$ utilizing predictive model M is of the form,

$\hat{x}_i^n(t)$ = prediction from model M for sensor $i$, $n$ minutes into the future from time $t$

$$X_i^{onto}(t) = \begin{bmatrix} \hat{x}_i^1(t-1) \\ \hat{x}_i^2(t-2) \\ \hat{x}_i^3(t-5) \\ \hat{x}_i^{10}(t-10) \\ \hat{x}_i^{15}(t-15) \\ \hat{x}_i^{30}(t-30) \\ \hat{x}_i^{60}(t-60) \end{bmatrix}$$

**10.** A method according to claim 1, wherein in said transformation function $X_i$ utilizing predictive model M is of the form,
$x_i(t)$ = sensor reading at time $t$

$\hat{x}_i^n(t)$ = prediction from model M for sensor $i$, $n$ minutes into the future from time $t$

$$X_i^{onto\text{-}error}(t) = \begin{bmatrix} \hat{x}_i^1(t-1) - x_i(t) \\ \hat{x}_i^2(t-2) - x_i(t) \\ \hat{x}_i^3(t-5) - x_i(t) \\ \hat{x}_i^{10}(t-10) - x_i(t) \\ \hat{x}_i^{15}(t-15) - x_i(t) \\ \hat{x}_i^{30}(t-30) - x_i(t) \\ \hat{x}_i^{60}(t-60) - x_i(t) \end{bmatrix}$$

Note: $\hat{x}_i^n(t-n) - x_i(t)$ = error for prediction $n$ minutes ago

**11.** A method according to claim 1, wherein in said transformation function $X_i$ utilizing predictive model M is of the form,
$x_i(t)$ = sensor $i$'s reading at time $t$

$\hat{x}_i^n(t)$ = prediction from model M for sensor $i$, $n$ minutes into the future from time $t$

$$X_i^{Afram}(t) = \begin{bmatrix} \hat{x}_i^1(t) - x_i(t) \\ \hat{x}_i^2(t) - x_i(t) \\ \hat{x}_i^5(t) - x_i(t) \\ \hat{x}_i^{10}(t) - x_i(t) \\ \hat{x}_i^{15}(t) - x_i(t) \\ \hat{x}_i^{30}(t) - x_i(t) \\ \hat{x}_i^{60}(t) - x_i(t) \end{bmatrix}.$$

**12.** A method according to claim 1, wherein in said transformation function $X_i$ utilizing predictive model M is of the form,

x, $(t)$ = sensor reading at time $t$

$\hat{x}_i^n(t)$ = prediction from model M for sensor $i$, $n$ minutes into the future from time $t$

$$X_i^{Atrans}(t) = \begin{bmatrix} \hat{x}_i^1(t-1) - x_i(t-1) \\ \hat{x}_i^2(t-2) - x_i(t-2) \\ \hat{x}_i^5(t-5) - x_i(t-5) \\ \hat{x}_i^{10}(t-10) - x_i(t-10) \\ \hat{x}_i^{15}(t-15) - x_i(t-15) \\ \hat{x}_i^{30}(t-30) - x_i(t-30) \\ \hat{x}_i^{60}(t-60) - x_i(t-60) \end{bmatrix}$$

**13.** A system for retrieving past alarm plant states or situations $C_i$ similar to a current plant state or situation $C$ for the guidance of a plant operator, whereby said plant comprises a plurality of sensors providing respective parameter values ($x_i(t)$), said system comprising:

means for collecting a database of sensor readings;
means for specifying a subset S of s sensors from said plurality of sensors;
means for specifying a subset N of h prediction time points;

means for specifying and training a model M on the database of sensor readings to provide predictions for future values $\left(x_i^n(t)\right)$ for the s sensors in S for the h time points in N;

means for specifying a width $w$ to be used as a number of time points of sensor data to be considered for a situation;
means for defining a situation $C$ as a collection of sensor data from a situation $t_c$ to an end time $t_{c+w}$;

**characterised in that** said system further comprises;

means for specifying a distance metric $\|.\|$;
means for specifying a transformation function $X$, said transformation function using the model M and other transforms (e.g., the identity transform) and operating on the parameter values of the sensors in S at any time t to return a respective matrix of real numbers of size h-by-s ($X(t)$);
means for obtaining from a database a set of labelled alarm situations $C_i$ and associated alarm sensors $S_i$, Si being a subset of S;
means for operating respectively on the sensor data of situations $C$ and $C_i$ using said transformation function $X$ for returning a set of mappings of the data contained in C and C$_i$ (T = {$X(t_c)$, $X(t_{c+1})$, ...$X(t_{c+w})$} and

$$T_i' = \{X(t_i), X(t_{i+1}), ...X(t_{i+w})\});$$

means for operating on said set of mappings using said distance metric $\|.\|$ so as to obtain a set of distances between the mapping corresponding to situation $C$ and the mappings corresponding to each of said situations $C_i$, whereby the distance between the mapping corresponding to a given past alarm state $C_i$, and the mapping corresponding to situation $C$ will only be based on the subset of readings which corresponds to $S_i$;
means for comparing the set of distances; and
means for selecting situations $C_i$ which have associated therewith a distance to the mapping of situation $C$ below a preset threshold $A_i$.

**Patentansprüche**

1. Verfahren zum Abrufen vergangener Anlagenalarmzustände oder Situationen $C_i$, die einem aktuellen Anlagenzustand oder einer aktuellen Situation $C$ gleichen, zur Führung eines Anlagenbedieners, wobei die Anlage mehrere Sensoren aufweist, die jeweilige Parameterwerte ($x_i(t)$) bereitstellen, wobei das Verfahren folgende Schritte aufweist:

   Zusammenstellen einer Datenbank mit Sensormesswerten; Festlegen einer Untergruppe S von s Sensoren aus der Vielzahl von Sensoren;
   Festlegen einer Untergruppe N von h Vorhersagezeitpunkten;

   Festlegen und Trainieren eines Modells M für die Datenbank mit Sensormesswerten, um Vorhersagen zukünftiger Werte $\left(x_i^n(t)\right)$ für die s Sensoren S für die h Zeitpunkte in N bereitzustellen;

   Festlegen einer Breite $w$, die als die Anzahl von Zeitpunkten von Sensordaten zu benutzen ist, welche für eine Situation zu berücksichtigen sind;
   Definieren einer Situation $C$ als eine Zusammenstellung von Sensordaten von einem Startzeitpunkt $t_c$ bis zu einem Endzeitpunkt $t_{c+w}$;

   **dadurch gekennzeichnet, dass** das Verfahren außerdem folgende Schritte aufweist:

   Festlegen eines Distanzmesswerts $\|.\|$;
   Festlegen einer Transformationsfunktion $X$, wobei die Transformationsfunktion das Modell M und andere Transformationen (z.B. die Identitätstransformation) benutzt und mit den Parameterwerten der Sensoren in S zu jedem möglichen Zeitpunkt t arbeitet, um eine entsprechende Matrix von reellen Zahlen der Größe h-mal-s (X (t)) zu erhalten;
   Erhalten von einer Datenbank einer Gruppe von **gekennzeichnet**en Alarmsituationen $C_i$ und zugeordneter Alarmsensoren $S_i$, wobei $S_i$ eine Untergruppe von S ist; Arbeiten jeweils mit den Sensordaten der Situationen $C$ und $C_i$ unter Benutzung der Transformationsfunktion X, um eine Gruppe von Zuordnungen der in $C$ enthaltenen Daten und $C_i$ ($T = \{X(t_c), X(t_{c+1}), ...X(t_{c+w})\}$ und $T_i' = \{X(t_i), X(t_{i+1}), ...X(t_{i+w})\}$) zu erhalten;
   Arbeiten mit der Gruppe von Zuordnungen unter Benutzung des Distanzmesswerts $\|.\|$, um eine Gruppe von Distanzen zwischen der Zuordnung, die der Situation $C$ entspricht, und den Zuordnungen, die jeder der Situationen $C_i$ entsprechen, zu erhalten, wodurch die Distanz zwischen der Zuordnung, die einem bestimmten vergangenen Alarmzustand $C_i$ entspricht, und die Zuordnung, die der Situation $C$ entspricht, nur auf der Untergruppe von Messwerten basiert, die $S_i$ entspricht; Vergleichen der Gruppe von Distanzen; und
   Auswählen der Situationen $C_i$, denen eine Distanz zu der Zuordnung der Situation $C$ unterhalb eines voreingestellten Schwellenwerts $A_i$ zugeordnet wird.

2. Verfahren nach Anspruch 1, wobei die Untergruppe S die gesamte Vielzahl von Sensoren enthält.

3. Verfahren nach Anspruch 1, wobei die Untergruppe S aus der Vielzahl von Sensoren vorausgewählt wird.

4. Verfahren nach Anspruch 1, wobei in dem Schritt des Vergleichens $C$ mit allen möglichen Kandidatenzuständen $C_i$ der Vergangenheit ab einem vorbestimmten Startzeitpunkt verglichen wird.

5. Verfahren nach Anspruch 1, wobei der Distanzmesswert die quadratische Mitteldistanz oder die absolute Distanz ist.

6. Verfahren nach Anspruch 1, das einen Schritt des Benutzens des prädiktiven Modells M umfasst, um Vorhersagen für den Wert von $x_i(t_c + n)$ zu einem oder mehreren Zeitpunkten, $n>0$ in der Zukunft, bereitzustellen, wobei "n" als der Horizont bezeichnet wird, und $x_i^n(t_c)$ die Vorhersage von M für den Wert von $x_i(t_c + n)$ bezeichnet, die als der Wert des Sensors i zum Zeitpunkt $t_c + n$ definiert ist.

7. Verfahren nach Anspruch 1, das einen Schritt umfasst, wobei M solche Vorhersagen für alle x in S für eine zuvor festgelegte Gruppe einiger Horizonte N bereitstellt.

8. Verfahren nach Anspruch 1, wobei in der Transformationsfunktion $X_i$, die das prädiktive Modell benutzt, M die Form aufweist:

$\hat{x}_i^n(t)$= Vorhersage von dem Modell M für Sensor $i$, n Minuten in der Zukunft von Zeitpunkt $t$

$$X_i^{von}(t) = \begin{vmatrix} \hat{x}_i^1(t) \\ \hat{x}_i^2(t) \\ \hat{x}_i^5(t) \\ \hat{x}_i^{10}(t) \\ \hat{x}_i^{15}(t) \\ \hat{x}_i^{30}(t) \\ \hat{x}_i^{60}(t) \end{vmatrix}$$

9. Verfahren nach Anspruch 1, wobei in der Transformationsfunktion $X_i$, die das prädiktive Modell benutzt, M die Form aufweist:

$\hat{x}_i^n(t)$= Vorhersage von dem Modell M für Sensor $i$, n Minuten in der Zukunft von Zeitpunkt $t$

$$X_i^{bis}(t) = \begin{vmatrix} \hat{x}_i^1(t-1) \\ \hat{x}_i^2(t-2) \\ \hat{x}_i^5(t-5) \\ \hat{x}_i^{10}(t-10) \\ \hat{x}_i^{15}(t-15) \\ \hat{x}_i^{30}(t-30) \\ \hat{x}_i^{60}(t-60) \end{vmatrix}$$

10. Verfahren nach Anspruch 1, wobei in der Transformationsfunktion $X_i$, die das prädiktive Modell benutzt, M die Form aufweist:

$x_i(t)$ = Sensormesswert zum Zeitpunkt t

$\hat{x}_i^n(t)$= Vorhersage von dem Modell M für Sensor $i$, n Minuten in der Zukunft von Zeitpunkt $t$

$$X_i^{bis-Fehler}(t) = \begin{vmatrix} \hat{x}_i^1(t-1) - x_i(t) \\ \hat{x}_i^2(t-2) - x_i(t) \\ \hat{x}_i^5(t-5) - x_i(t) \\ \hat{x}_i^{10}(t-10) - x_i(t) \\ \hat{x}_i^{15}(t-15) - x_i(t) \\ \hat{x}_i^{30}(t-30) - x_i(t) \\ \hat{x}_i^{60}(t-60) - x_i(t) \end{vmatrix}$$

Hinweis: $\hat{x}_i^n(t - n) - x_i(t)$ = Fehler für Vorhersage vor n Minuten

**11.** Verfahren nach Anspruch 1, wobei in der Transformationsfunktion $X_i$, die das prädiktive Modell benutzt, M die Form aufweist:

$x_i(t)$ = Messwert des Sensors *i* zum Zeitpunkt *t*

$\hat{x}_i^n(t)$ = Vorhersage von dem Modell M für Sensor *i*, n Minuten in der Zukunft von Zeitpunkt *t*

$$X_i^{\Delta von}(t) = \begin{vmatrix} \hat{x}_i^1(t) - x_i(t) \\ \hat{x}_i^2(t) - x_i(t) \\ \hat{x}_i^5(t) - x_i(t) \\ \hat{x}_i^{10}(t) - x_i(t) \\ \hat{x}_i^{15}(t) - x_i(t) \\ \hat{x}_i^{30}(t) - x_i(t) \\ \hat{x}_i^{60}(t) - x_i(t) \end{vmatrix}$$

**12.** Verfahren nach Anspruch 1, wobei in der Transformationsfunktion $X_i$, die das prädiktive Modell benutzt, M die Form aufweist:

$x_i(t)$ = Sensormesswert zum Zeitpunkt t

$\hat{x}_i^n(t)$ = Vorhersage von dem Modell M für Sensor *i*, n Minuten in der Zukunft von Zeitpunkt *t*

$$X_i^{\Delta bis}(t) = \begin{vmatrix} \hat{x}_i^1(t-1) - x_i(t-1) \\ \hat{x}_i^2(t-2) - x_i(t-2) \\ \hat{x}_i^5(t-5) - x_i(t-5) \\ \hat{x}_i^{10}(t-10) - x_i(t-10) \\ \hat{x}_i^{15}(t-15) - x_i(t-15) \\ \hat{x}_i^{30}(t-30) - x_i(t-30) \\ \hat{x}_i^{60}(t-60) - x_i(t-60) \end{vmatrix}$$

13. System zum Abrufen vergangener Anlagenalarmzustände oder Situationen $C_i$, die einem aktuellen Anlagenzustand oder einer aktuellen Situation C gleichen, zur Führung eines Anlagenbedieners, wobei die Anlage mehrere Sensoren aufweist, die jeweilige Parameterwerte ($x_i(t)$) bereitstellen, wobei das System aufweist:

Mittel zum Zusammenstellen einer Datenbank mit Sensormesswerten;
Mittel zum Festlegen einer Untergruppe S von s Sensoren aus der Vielzahl von Sensoren;
Mittel zum Festlegen einer Untergruppe N von h Vorhersagezeitpunkten;
Mittel zum Festlegen und Trainieren eines Modells M für die Datenbank mit Sensormesswerten, um Vorhersagen zukünftiger Werte $\left(x_i^n(t)\right)$ für die s Sensoren S für die h Zeitpunkte in N bereitzustellen;

Mittel zum Festlegen einer Breite $w$, die als die Anzahl von Zeitpunkten von Sensordaten zu benutzen ist, welche für eine Situation zu berücksichtigen sind;
Mittel zum Definieren einer Situation C als eine Zusammenstellung von Sensordaten von einem Startzeitpunkt $t_c$ bis zu einem Endzeitpunkt $t_{c+w}$;

**dadurch gekennzeichnet, dass** das System außerdem aufweist:

Mittel zum Festlegen eines Distanzmesswerts $\|.\|$ ;
Mittel zum Festlegen einer Transformationsfunktion $X$, wobei die Transformationsfunktion das Modell M und andere Transformationen (z.B. die Identitätstransformation) benutzt und mit den Parameterwerten der Sensoren in S zu jedem möglichen Zeitpunkt t arbeitet, um eine entsprechende Matrix von reellen Zahlen der Größe h-mal-s (X(t)) zu erhalten;
Mittel zum Erhalten von einer Datenbank einer Gruppe von **gekennzeichnet**en Alarmsituationen $C_i$ und zugeordneter Alarmsensoren $S_i$, wobei $S_i$ eine Untergruppe von S ist;
Mittel zum Arbeiten jeweils mit den Sensordaten der Situationen C und $C_i$ unter Benutzung der Transformationsfunktion X, um eine Gruppe von Zuordnungen der in C enthaltenen Daten und $C_i$ ($T$= {X($t_c$), X($t_{c+1}$), ...X

$(t_{c+w})$} und $T_i' = \{X(t_i),\ X(t_{i+1}),\ \ldots X(t_{i+w})\})$ X($t_{i+1}$), ... X($t_{i+w}$)}) zu erhalten;

Mittel zum Arbeiten mit der Gruppe von Zuordnungen unter Benutzung des Distanzmesswerts $\|.\|$, um eine Gruppe von Distanzen zwischen der Zuordnung, die der Situation C entspricht, und den Zuordnungen, die jeder der Situationen $C_i$ entsprechen, zu erhalten, wodurch die Distanz zwischen der Zuordnung, die einem bestimmten vergangenen Alarmzustand $C_i$ entspricht, und die Zuordnung, die der Situation C entspricht, nur auf der Untergruppe von Messwerten basiert, die $S_i$ entspricht;
Mittel zum Vergleichen der Gruppe von Distanzen; und
Mittel zum Auswählen der Situationen $C_i$, denen eine Distanz zu der Zuordnung der Situation C unterhalb eines voreingestellten Schwellenwerts $A_i$ zugeordnet wird.

## Revendications

1. Procédé pour retrouver des états ou des situations d'installation d'alarme passées $C_i$ qui sont similaires à un état ou une situation d'installation courante C pour le guidage d'un opérateur d'installation, dans lequel ladite installation comprend une pluralité de capteurs fournissant des valeurs de paramètre respectives ($x_i(t)$), ledit procédé comprenant les étapes de :

collecte d'une base de données de lectures de capteur ;
spécification d'un sous-jeu S de s capteurs à partir de ladite pluralité de capteurs ;
spécification d'un sous-jeu N de h points temporels de prédiction ;
spécification et apprentissage d'un modèle M sur la base de données de lectures de capteur pour fournir des prédictions de valeurs futures $\left(x_i^n(t)\right)$ pour les s capteurs dans S pour les h points temporels dans N ;
spécification d'une largeur w à utiliser en tant que nombre de points temporels de données de capteur à considérer pour une situation ;
définition d'une situation C en tant que collection de données de capteur depuis un temps de début $t_c$ jusqu'à un temps de fin $t_{c+w}$,

**caractérisé en ce que** ledit procédé comprend en outre les étapes de :

spécification d'une mesure de distance $\|.\|$ ;
spécification d'une fonction de transformation X, ladite fonction de transformation utilisant le modèle M et d'autres transformations (par exemple la transformation d'identité) et opérant sur les valeurs de paramètre des capteurs dans S à un quelconque temps t pour retourner une matrice respective de nombres réels d'une dimension h sur s($X(t)$) ;
obtention, à partir d'une base de données, d'un jeu de situations d'alarme étiquetées $C_i$ et de capteurs d'alarme associés $S_i$, $S_i$ étant un sous-jeu de S ;
action consistant à opérer respectivement sur les données de capteur de situations C et $C_i$ en utilisant ladite fonction de transformation X pour retourner un jeu de cartographies des données contenues dans C et $C_i$ (T = {$X(t_c)$, $X(t_{c+1})$, ..., $X(t_{c+w})$} et $T_i'$ = {$X(t_i)$, $X(t_{i+1})$, ..., $X(t_{i+w})$}) ;
action consistant à opérer sur ledit jeu de cartographies en utilisant ladite mesure de distance $\|.\|$ de manière à obtenir un jeu de distances entre la cartographie correspondant à la situation C et les cartographies correspondant à chacune desdites situations $C_i$ et ainsi, la distance entre la cartographie correspondant à un état d'alarme passé donné $C_i$ et la cartographie correspondant à une situation C sera seulement basée sur le sous-jeu de lectures qui correspond à $S_i$ ;
comparaison du jeu de distances ; et
sélection de situations $C_i$ qui se sont vues associer une distance par rapport à la cartographie de situation C au-dessous d'un seuil préétabli $A_i$.

2. Procédé selon la revendication 1, dans lequel ledit sous-jeu S contient tous les capteurs de ladite pluralité de capteurs.

3. Procédé selon la revendication 1, dans lequel ledit sous-jeu S est présélectionné à partir de ladite pluralité de capteurs.

4. Procédé selon la revendication 1, dans lequel, au niveau de ladite étape de comparaison, C est comparé à tous les états de candidat possibles $C_i$ dans le passé depuis un temps de début prédéterminé.

5. Procédé selon la revendication 1, dans lequel ladite mesure de distance est la distance quadratique moyenne ou la distance absolue.

6. Procédé selon la revendication 1, incluant une étape d'utilisation dudit modèle de prédiction, soit M, pour fournir des prédictions pour la valeur de $x_i(t_c + n)$ au niveau d'un ou de plusieurs points temporels, n > 0 dans le futur, où "n" est appelé l'horizon et $X_i^n(t_c)$ représente une prédiction de M pour la valeur de $x_i(t_c + n)$ qui est définie comme étant la valeur d'un capteur i au temps $t_c + n$.

7. Procédé selon la revendication 1, incluant une étape dans laquelle M fournit ces prédictions pour tout x dans S, pour un quelconque jeu préspécifié d'horizons, soit N.

8. Procédé selon la revendication 1, dans lequel ladite fonction de transformation $X_i$ qui utilise un modèle de prédiction M est de la forme :

$\hat{x}^n_i$ (t) = prédiction à partir du modèle M pour le capteur i, n minutes dans le futur depuis le temps t

$$X_i^{from}(t) = \begin{bmatrix} \hat{x}_i^1(t) \\ \hat{x}_i^2(t) \\ \hat{x}_i^5(t) \\ \hat{x}_i^{10}(t) \\ \hat{x}_i^{15}(t) \\ \hat{x}_i^{30}(t) \\ \hat{x}_i^{60}(t) \end{bmatrix}.$$

**9.** Procédé selon la revendication 1, dans lequel ladite fonction de transformation $X_i$ qui utilise un modèle de prédiction M est de la forme :

$\hat{x}^n_i$ (t) = prédiction à partir du modèle M pour le capteur i, n minutes dans le futur depuis le temps t

$$X_i^{onto}(t) = \begin{bmatrix} \hat{x}_i^1(t-1) \\ \hat{x}_i^2(t-2) \\ \hat{x}_i^5(t-5) \\ \hat{x}_i^{10}(t-10) \\ \hat{x}_i^{15}(t-15) \\ \hat{x}_i^{30}(t-30) \\ \hat{x}_i^{60}(t-60) \end{bmatrix}.$$

**10.** Procédé selon la revendication 1, dans lequel ladite fonction de transformation $X_i$ qui utilise un modèle de prédiction M est de la forme :

$x_i(t)$ = lecture de capteur au temps t

$\hat{x}^n_i$ (t) = prédiction à partir du modèle M pour le capteur i, n minutes dans le futur depuis le temps t

$$X_i^{onto-error}(t) = \begin{bmatrix} \hat{x}_i^1(t-1) - x_i(t) \\ \hat{x}_i^2(t-2) - x_i(t) \\ \hat{x}_i^5(t-5) - x_i(t) \\ \hat{x}_i^{10}(t-10) - x_i(t) \\ \hat{x}_i^{15}(t-15) - x_i(t) \\ \hat{x}_i^{30}(t-30) - x_i(t) \\ \hat{x}_i^{60}(t-60) - x_i(t) \end{bmatrix}$$

nota : $\widehat{x}_i^n$ (t-n)-$x_i$(t) = erreur pour une prédiction n minutes avant.

**11.** Procédé selon la revendication 1, dans lequel ladite fonction de transformation $X_i$ qui utilise un modèle de prédiction M est de la forme :

$x_i$(t) = lecture du capteur i au temps t

$\widehat{x}_i^n$ (t) = prédiction à partir du modèle M pour le capteur i, n minutes dans le futur depuis le temps t

$$X_i^{\Delta from}(t) = \begin{bmatrix} \widehat{x}_i^1(t) - x_i(t) \\ \widehat{x}_i^2(t) - x_i(t) \\ \widehat{x}_i^5(t) - x_i(t) \\ \widehat{x}_i^{10}(t) - x_i(t) \\ \widehat{x}_i^{15}(t) - x_i(t) \\ \widehat{x}_i^{30}(t) - x_i(t) \\ \widehat{x}_i^{60}(t) - x_i(t) \end{bmatrix}.$$

**12.** Procédé selon la revendication 1, dans lequel ladite fonction de transformation $X_i$ qui utilise le modèle de prédiction M est de la forme :

$x_i$(t) = lecture de capteur au temps t

$\widehat{x}_i^n$ (t) = prédiction à partir du modèle M pour le capteur i, n minutes dans le futur depuis le temps t

$$X_i^{\Delta onto}(t) = \begin{bmatrix} \widehat{x}_i^1(t-1) - x_i(t-1) \\ \widehat{x}_i^2(t-2) - x_i(t-2) \\ \widehat{x}_i^5(t-5) - x_i(t-5) \\ \widehat{x}_i^{10}(t-10) - x_i(t-10) \\ \widehat{x}_i^{15}(t-15) - x_i(t-15) \\ \widehat{x}_i^{30}(t-30) - x_i(t-30) \\ \widehat{x}_i^{60}(t-60) - x_i(t-60) \end{bmatrix}.$$

**13.** Système pour retrouver des états ou des situations d'installation d'alarme passées $C_i$ qui sont similaires à un état ou une situation d'installation courante C pour le guidage d'un opérateur d'installation, dans lequel ladite installation comprend une pluralité de capteurs qui fournissent des valeurs de paramètre respectives ($x_i$(t)), ledit système comprenant :

un moyen pour collecter une base de données de lectures de capteur ;
un moyen pour spécifier un sous-jeu S de s capteurs à partir de ladite pluralité de capteurs ;
un moyen pour spécifier un sous-jeu N de h points temporels de prédiction ;
un moyen pour spécifier et apprendre un modèle M sur la base de données de lectures de capteur pour fournir des prédictions pour des valeurs futures $\left(x_i^n(t)\right)$ pour les s capteurs dans S pour les h points temporels dans N ;

un moyen pour spécifier une largeur w à utiliser en tant que nombre de points temporels de données de capteur à considérer pour une situation ;

un moyen pour définir une situation C en tant que collection de données de capteur depuis une situation $t_c$ jusqu'à un temps de fin $t_{c+w}$,

**caractérisé en ce que** ledit système comprend en outre :

un moyen pour spécifier une mesure de distance $\|.\|$;

un moyen pour spécifier une fonction de transformation X, ladite fonction de transformation utilisant le modèle M et d'autres transformations (par exemple la transformation d'identité) et opérant sur les valeurs de paramètre des capteurs dans S à un quelconque temps t pour retourner une matrice respective de nombres réels d'une dimension h sur s (X(t)) ;

un moyen pour obtenir, à partir d'une base de données, un jeu de situations d'alarme étiquetées $C_i$ et de capteurs d'alarme associés $S_i$, $S_i$ étant un sous-jeu de S ;

un moyen pour opérer de façon respective sur les données de capteur de situations C et $C_i$ en utilisant ladite fonction de transformation X pour retourner un jeu de cartographies des données contenues dans C et $C_i$ (T = {X($t_c$), X($t_{c+1}$), ..., X($t_{c+w}$)} et $T_i$' = {X($t_i$), X($t_{i+1}$), ..., X($t_{i+w}$)}) ;

un moyen pour opérer sur ledit jeu de cartographies en utilisant ladite mesure de distance $\|.\|$ de manière à obtenir un jeu de distances entre la cartographie qui correspond à une situation C et les cartographies qui correspondent à chacune desdites situations $C_i$ et ainsi, la distance entre la cartographie qui correspond à un état d'alarme passé donné $C_i$ et la cartographie qui correspond à la situation C sera seulement basée sur le sous-jeu de lectures qui correspond à $S_i$ ;

un moyen pour comparer le jeu de distances ; et

un moyen pour sélectionner des situations $C_i$ qui se sont vues associer une distance par rapport à la cartographie de situation C au-dessous d'un seuil préétabli $A_i$.

## FIG. 1

| SCHEME | RATING |
|---|---|
| RLS (INCREMENTAL) | 0.424479 |
| MAL WITH SIMPLE SCHEMES | 0.428431 |
| MIXTURE OF SIMPLE SCHEMES (MOSS) | 0.432147 |
| BEST BATCH LEARNING SCHEME | 0.457717 |
| CURRENT VALUE FORECASTER (CVF) | 0.477056 |
| MEAN VALUE FORECASTER | 1.145009 |

| SCHEME | RATING |
|---|---|
| MAL (6 RLS's) | 0.363859 |
| MAL (3 RLS's) | 0.373590 |
| MAL (SS's) | 0.389200 |
| MOSS | 0.410660 |
| CVF | 0.453434 |